# EUROPÄISCHE PATENTSCHRIFT

(11) **EP 2 751 362 B1**
(45) Veröffentlichungstag und Bekanntmachung des Hinweises auf die Patenterteilung: **25.04.2018**
(21) Anmeldenummer: 12761872.6
(22) Anmeldetag: 23.08.2012
(51) Int. Cl.: E05D 5/02, E05D 7/02, F16B 12/00

(54) **BEFESTIGUNGSVORRICHTUNG FÜR EINEN MÖBELBESCHLAG**
FIXING DEVICE FOR A FURNITURE FITTING
DISPOSITIF DE FIXATION POUR UNE GARNITURE DE MEUBLE

(30) Priorität: 01.09.2011 AT 12482011
(43) Veröffentlichungstag der Anmeldung: 09.07.2014
(73) Patentinhaber: Julius Blum GmbH, 6973 Höchst (AT)
(72) Erfinder: SUTTERLÜTTI, Harald, A-6972 Fussach (AT)
(74) Vertreter: Torggler & Hofinger Patentanwälte
(86) Internationale Anmeldenummer: PCT/AT2012/000215
(87) Internationale Veröffentlichungsnummer: WO 2013/029070

(56) Entgegenhaltungen:
- CN-Y- 2 844 538
- DE-A1-102007 049 143

## Beschreibung

Die Erfindung betrifft einen Möbelbeschlag für ein Möbel mit wenigstens einer Befestigungsvorrichtung zum Befestigen des Möbelbeschlags an dem Möbel, wobei mit der Befestigungsvorrichtung der Möbelbeschlag wahlweise mit einer linken oder einer rechten Möbelbeschlagsseite am Möbel befestigbar ist.

Weiters betrifft die Erfindung ein Möbel mit einem solchen Möbelbeschlag.

Ein derartiger Möbelbeschlag wird z.B. in der AT 503 661 A4 vom 15. Dezember 2007 gezeigt. Mit Hilfe der Befestigungsvorrichtung des Möbelbeschlags wird der Möbelbeschlag - der hier als Stellantrieb für eine Möbelklappe ausgebildet ist - an einem Möbelkorpus befestigt. Der Stellantrieb ist dabei derart ausgebildet, dass er sowohl an der linken Seite als auch an der rechten Seite des Möbelkorpus befestigt werden kann und somit mit einer Ausführung des Stellantriebes beide Montagepositionen realisiert werden können. Dazu weist die Befestigungsvorrichtung durchgehende Öffnungen von einer Stellantriebsseite zur anderen auf. In diese durchgehenden Öffnungen wird ein Verbindungselement - normalerweise eine Schraube - eingeführt und der Stellantrieb wird mittels dieser Schraube an dem Möbelkorpus festgeschraubt. Um die Montage an der anderen Möbelkorpusseite zu realisieren, wird die Schraube von der anderen Stellantriebsseite aus in die Durchgangsöffnung der Befestigungsvorrichtung eingeführt - somit kann der Stellantrieb auf der anderen Korpusseite angeschraubt werden.

Aufgabe der Erfindung ist es, einen gegenüber dem Stand der Technik verbesserten Möbelbeschlag anzugeben.

Diese Aufgabe wird durch einen Möbelbeschlag mit den Merkmalen des Anspruchs 1 gelöst.

Dadurch, dass der Befestigungskörper im Wesentlichen vollständig im Möbelbeschlag ausgebildet ist und dass das Verbindungselement sowohl zwei Verbindungselementanschläge als auch zwei Verbindungselementbereiche zum Befestigen des Möbelbeschlags am Möbel aufweist, muss das Verbindungselement nicht aus der Befestigungsvorrichtung bzw. dem Möbelbeschlag entnommen werden, um mit der Befestigungsvorrichtung den Möbelbeschlag an einer gegenüberliegenden Seite des Möbels zu montieren.

Durch die Ausbildung des Befestigungskörpers im Möbelbeschlag kann dieser Möbelbeschlag als komplette Baugruppe vorgefertigt werden und es ist kein zusätzlicher Zusammenbau bei der Montage des Möbelbeschlags am Möbel notwendig.

Dadurch, dass das Verbindungselement zumindest teilweise in der Durchgangsöffnung angeordnet ist und das Verbindungselement relativ zu dem Befestigungskörper begrenzt bewegbar ist, kann das Verbindungselement in der Durchgangsöffnung des Befestigungskörpers verweilen und somit kann erzielt werden, dass das Verbindungselement nicht verloren geht - da es nur begrenzt zum Befestigungskörper bewegbar ist.

Durch die Ausgestaltung von zwei Anschlägen im oder am Befestigungskörper und die zwei Verbindungselementanschläge des Verbindungselementes wird erzielt, dass jeder einzelne Verbindungselementanschlag mit einem der beiden Anschläge des Befestigungskörpers korrespondieren kann - im Unterschied zum Stand der Technik, bei dem das Verbindungselement nur einen Verbindungselementanschlag aufweist (der Kopf einer Schraube etwa).

Weitere vorteilhafte Ausführungsformen der Erfindung sind in den abhängigen Ansprüchen definiert.

Als besonders vorteilhaft hat es sich herausgestellt, wenn das Verbindungselement und der Befestigungskörper gemeinsam als eine vormontierte, untrennbare Baueinheit ausgebildet sind. Dadurch kann erzielt werden, dass sich das Verbindungselement nicht von dem Befestigungskörper trennen kann und somit kann gewährleistet werden, dass das Verbindungselement nicht verloren geht.

Gemäß einem bevorzugten Ausführungsbeispiel kann vorgesehen sein, dass sich das Verbindungselement im Wesentlichen vollständig durch die Durchgangsöffnung des Befestigungskörpers hin erstreckt.

Weiters kann bevorzugt vorgesehen sein, dass das Verbindungselement im Montagezustand einerseits versenkt in der Durchgangsöffnung der Befestigungsvorrichtung und andererseits im Möbel aufgenommen ist. Somit kann eine ästhetisch ansprechende Befestigungsvorrichtung im Montagezustand erzielt werden, da dadurch, dass das Verbindungselement in der Befestigungsvorrichtung versenkt ist, dieses Verbindungselement nicht über die Befestigungsvorrichtung seitlich hinaus ragt.

Als besonders vorteilhaft hat es sich erwiesen, wenn das Verbindungselement einstückig ausgebildet ist. Durch eine einstückige Ausbildung des Verbindungselementes können die Montagezeiten kurz gehalten werden.

Besonders bevorzugt kann vorgesehen sein, dass die Verbindungselementanschläge radial vom Verbindungselement abstehen.

Als besonders vorteilhaft hat es sich dabei herausgestellt, wenn die Verbindungselementanschläge als Flansch am Verbindungselement ausgebildet sind.

Gemäß einem bevorzugten Ausführungsbeispiel kann vorgesehen sein, dass die Verbindungselementbereiche kraftschlüssig und/oder formschlüssig mit dem Möbel verbindbar sind.

Als vorteilhaft hat es sich weiters herausgestellt, wenn die beiden Verbindungselementbereiche zueinander symmetrisch am Verbindungselement ausgebildet sind.

Weiters hat es sich als vorteilhaft erwiesen, wenn ein Verbindungselementbereich in Montagestellung die linke oder die rechte Möbelbeschlagseite überragt. Durch das Überragen des Verbindungselementbereichs über die Möbelbeschlagsseiten hinaus kann das Verbindungselement in einen Möbelkorpus eindringen und in diesem befestigt werden.

Bevorzugt kann weiters vorgesehen sein, dass die Verbindungselementbereiche des Verbindungselements jeweils ein Gewinde aufweisen. Durch die Verwendung eines Gewindes kann auf einfach Art und Weise eine Befestigung erfolgen.

Gemäß einem möglichen Ausführungsbeispiel kann vorgesehen sein, dass das Verbindungselement zwei Enden aufweist, wobei die beiden Enden des Verbindungselementes als Bolzenschrauben ausgebildet sind.

Gemäß einem bevorzugten Ausführungsbeispiel kann vorgesehen sein, dass am Verbindungselement zwei gesonderte Werkzeugaufnahmen ausgebildet sind. Durch die Ausbildung von zwei eigenständigen Werkzeugaufnahmen kann jede einzeln für die Montage an einer Möbelbeschlagsseite Verwendung finden.

Günstigerweise sind die Werkzeugaufnahmen als Schlitz oder Kreuzschlitz oder Innensechskant oder Innensechsrund ausgebildet.

Ebenso hat es sich als vorteilhaft herausgestellt, wenn das Verbindungselement als eine doppelte Endenbolzenschraube mit Flansch ausgebildet ist.

Dabei ist besonders bevorzugt vorgesehen, dass die Anschläge des Befestigungskörpers im Möbelbeschlag - beabstandet zu der linken und rechten Möbelbeschlagsseite - ausgebildet sind. Somit sind die Anschläge des Befestigungskörpers im Inneren des Möbelbeschlags ausgebildet, was dazu beitragen kann, dass ein schlanker Möbelbeschlag herstellbar ist.

Gemäß einem bevorzugten Ausführungsbeispiel kann vorgesehen sein, dass der Möbelbeschlag als Ausstoßvorrichtung, Antriebsvorrichtung, Einzugsvorrichtung oder Dämpfungsvorrichtung für ein bewegliches Möbelteil oder als Stellantrieb für eine Möbelklappe oder als Schienenausziehführung oder als Beleuchtungsvorrichtung ausgebildet ist.

Schutz wird auch begehrt für ein Möbel mit einem Möbelbeschlag nach wenigstens einer der beschriebenen Ausführungsformen.

Weitere Einzelheiten und Vorteile der Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine perspektivische Darstellung eines Möbels mit einer Möbelklappe,
- Fig. 2: eine perspektivische Darstellung eines Möbels mit entfernter Möbelklappe,
- Fig. 3: eine perspektivische Darstellung einer Seitenwand eines Möbelkorpus von einem Möbel mit darauf montiertem Möbelbeschlag,
- Fig. 4a: eine perspektivische Darstellung einer Möbelseitenwand wie in Fig. 3,
- Fig. 4b: eine Detailansicht der Fig. 4a,
- Fig. 5a: eine perspektivische Ansicht einer Möbelseitenwand wie in Fig. 3,
- Fig. 5b: eine Detailansicht der Fig. 5a,
- Fig. 6a: eine perspektivische Seitenansicht eines Möbelbeschlags mit einem Schnitt bei einer Befestigungsvorrichtung,
- Fig. 6b: eine Detailansicht der Fig. 6a,
- Fig. 7a: eine perspektivische Seitenansicht eines Möbelbeschlags mit einem Schnitt bei einer Befestigungsvorrichtung,
- Fig. 7b: eine Detailansicht der Fig. 7a,
- Fig. 8a: einen Schnitt durch einen Möbelbeschlag und dessen Befestigungsvorrichtung,
- Fig. 8b: eine Detailansicht der Fig. 8a,
- Fig. 9a: einen Schnitt durch einen Möbelbeschlag und dessen Befestigungsvorrichtung,
- Fig. 9b: eine Detailansicht der Fig. 9a,
- Fig. 10a bis 10d: verschiedene Ansichten eines Verbindungselements,
- Fig. 11a: eine schematische Darstellung einer Befestigungsvorrichtung,
- Fig. 11b: schematische Darstellung einer Variante einer Befestigungsvorrichtung.

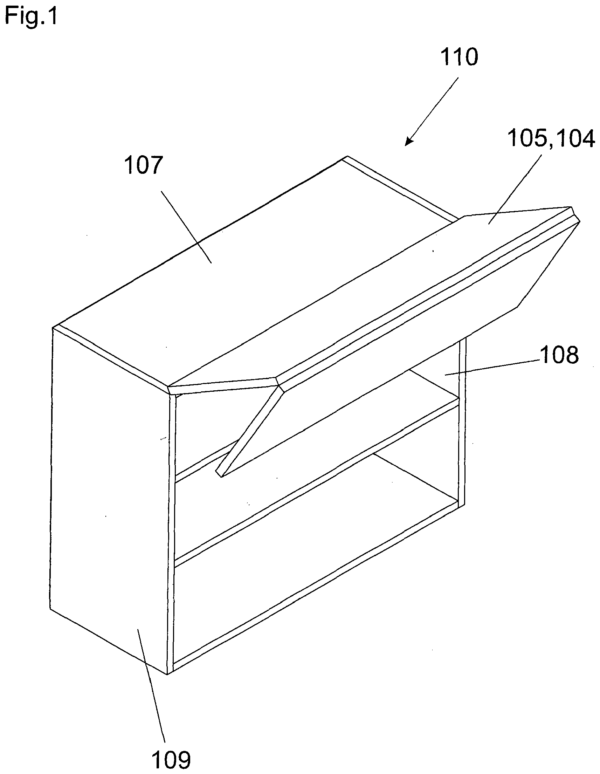

Figur 1 zeigt eine perspektivische Darstellung eines Möbels 110. Dieses Möbel 110 weist einen Möbelkorpus 107 und ein bewegliches Möbelteil 104 - welches als Möbelklappe 105 ausgebildet ist - auf. Der Möbelkorpus 107 weist weiters eine rechte Möbelkorpusseite 108 und eine linke Möbelkorpusseite 109 auf.

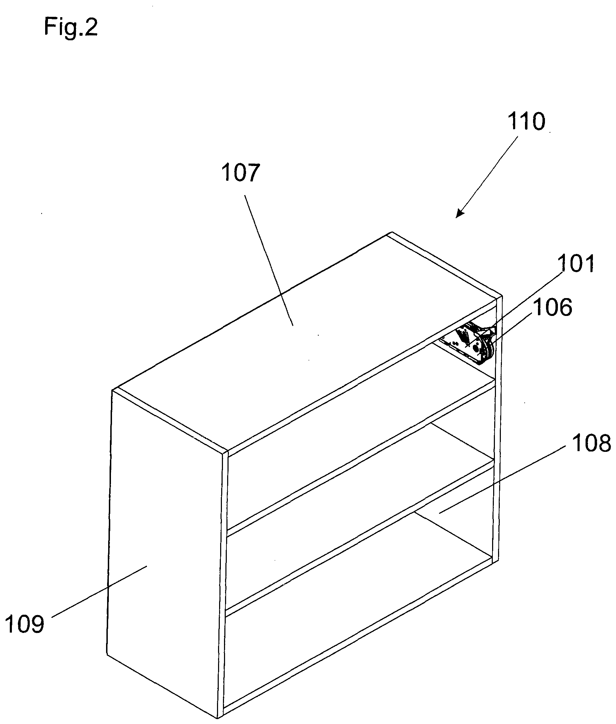

An diesen Möbelkorpusseiten 108 und 109 wird - wie dies in der Figur 2 dargestellt ist - der Möbelbeschlag 101 mittels einer hier nicht dargestellten Befestigungsvorrichtung 100 befestigt. Der Möbelbeschlag 101 ist in diesem Ausführungsbeispiel als ein Stellantrieb 106 für die hier nicht dargestellte Möbelklappe 105 ausgeführt (siehe dazu Figur 1).

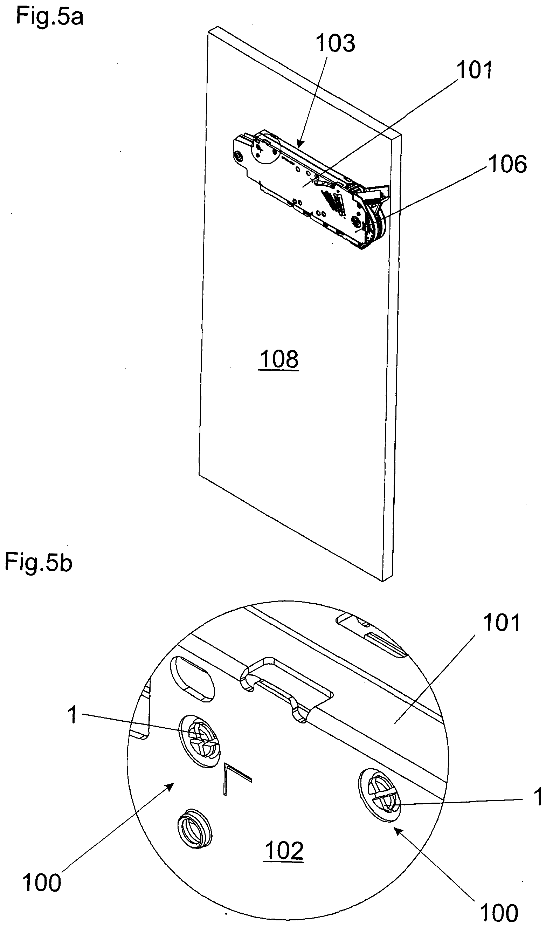

Ein weiterer Möbelbeschlag 101 ist auf der gegenüberliegenden linken Möbelkorpusseite 109 befestigt (in dieser Darstellung nicht ersichtlich). Um für eine Anbringung an der linken bzw. einer rechten Möbelkorpusseite nicht zwei unterschiedliche Ausführungen für Möbelbeschläge 101 herstellen zu müssen, sind diese Möbelbeschläge 101 oftmals symmetrisch ausgebildet, das heißt, dass man ein und denselben Möbelbeschlag 101 sowohl auf der linken Möbelkorpusseite 109 als auch auf der rechten Möbelkorpusseite 108 befestigen kann. In dieser und auch in den folgenden Figuren wird jeweils von einem Möbelbeschlag 101 die Rede sein, welcher an einer linken 109 oder rechten Möbelkorpusseitenwand 108 eines Möbels 110 befestigt wird. Es versteht sich von selbst, dass natürlich auch Möbelbeschläge 101 angedacht sein können, die nicht auf der linken 109 oder rechten Möbelkorpusseitenwand 108 befestigt werden, sondern an einer anderen Seite des Möbels 110 - wie etwa dem Boden oder der Decke des Möbelkorpus 107 oder auf einem der im Möbelkorpus 107 angeordneten Fachböden, oder auch auf einem beweglichen Möbelteil (wie einer Möbelklappe) einer Schublade oder Ähnlichem. Wichtig dabei ist ausschließlich, dass es sich bei dem Möbelbeschlag 101 um eine symmetrisch ausgebildete Baugruppe handelt, die es ermöglicht, den Möbelbeschlag 101 selbst an zwei unterschiedlichen Möbelbeschlagsseiten (wie etwa einer linken Möbelbeschlagseite 102 und einer rechten Möbelbeschlagseite 103) an einer Seite des Möbels 110 anzuordnen (siehe Figuren 5a bis 9b).

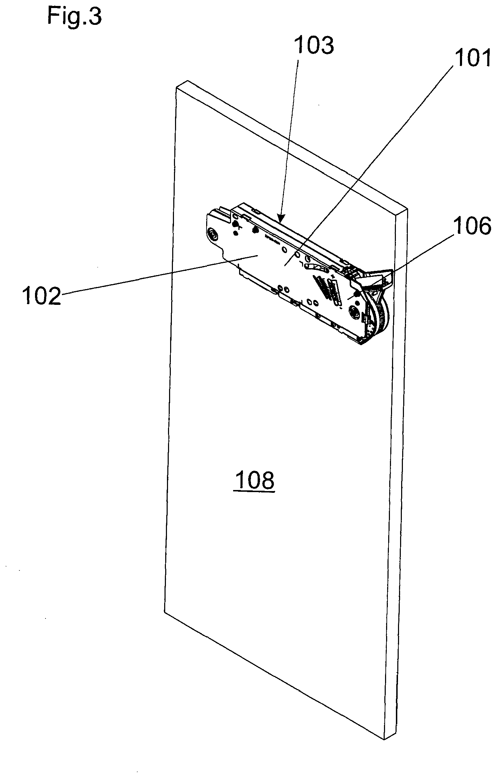

Figur 3 zeigt die rechte Möbelkorpusseite 108, an der im oberen Bereich der Möbelbeschlag 101 mit seiner rechten Möbelbeschlagseite 103 an der rechten Möbelkorpusseite 108 befestigt wurde. Dieser Möbelbeschlag 101 ist in diesem bevorzugten Ausführungsbeispiel als Stellantrieb 106 für eine hier nicht dargestellte Möbelklappe 105 ausgebildet.

Dieser Möbelbeschlag 101 hätte ebenso mit seiner linken Möbelbeschlagseite 102 auf einer hier nicht dargestellten linken Möbelkorpusseite 109 befestigt werden können - dank der symmetrischen Ausführung des Möbelbeschlags 101.

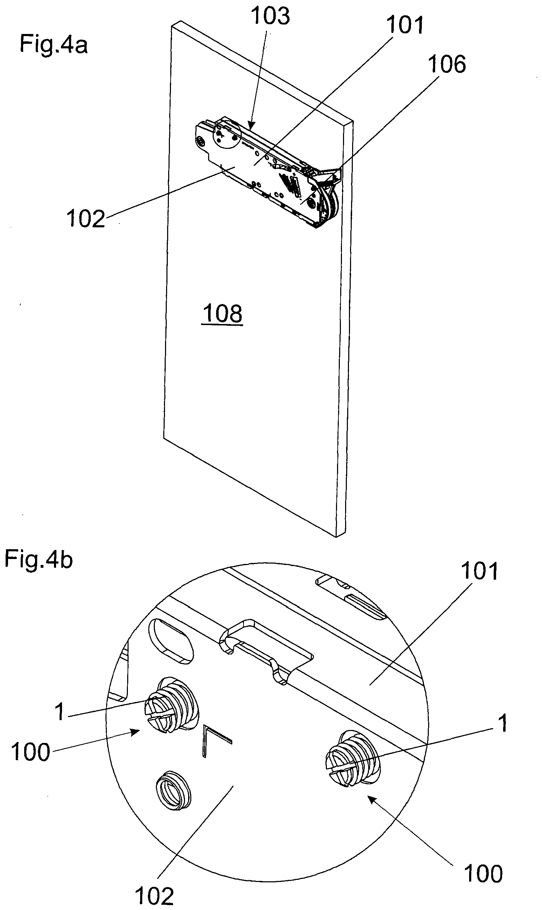

Figur 4a zeigt den Möbelbeschlag 101 an der rechten Möbelkorpusseite 108 wie eben bei der Figur 3 beschrieben.

In der Figur 4b ist nun eine Detailansicht der Figur 4a dargestellt, bei der eine Befestigungsvorrichtung 100 des Möbelbeschlags 101 teilweise sichtbar ist. Die Befestigungsvorrichtung 100 weist dabei ein Verbindungselement 1 auf, welches über die linke Möbelbeschlagseite 102 des Möbelbeschlags 101 hinausragt. Mit Hilfe des Verbindungselementes 1 kann der Möbelbeschlag 101 an der rechten Möbelkorpusseite 108 befestigt werden. Um eine dauerhafte und stabile Befestigung zu ermöglichen, weist dabei der Möbelbeschlag 101 mehrere Befestigungsvorrichtungen 100 auf, in dieser Detailansicht der Figur 4b sind zwei dieser Befestigungsvorrichtungen 100 erkennbar.

Dadurch, dass die beiden Verbindungselemente 1 noch über die linke Möbelbeschlagseite 102 hinausragen, ist erkennbar, dass der Möbelbeschlag 101 noch nicht vollständig an der rechten Möbelkorpusseite 108 befestigt worden ist. Die Befestigung erfolgte erst dann vollständig, wenn das Verbindungselement 1 vollständig hineingeschraubt worden ist - so wie dies in den Figuren 5a und 5b dargestellt ist.

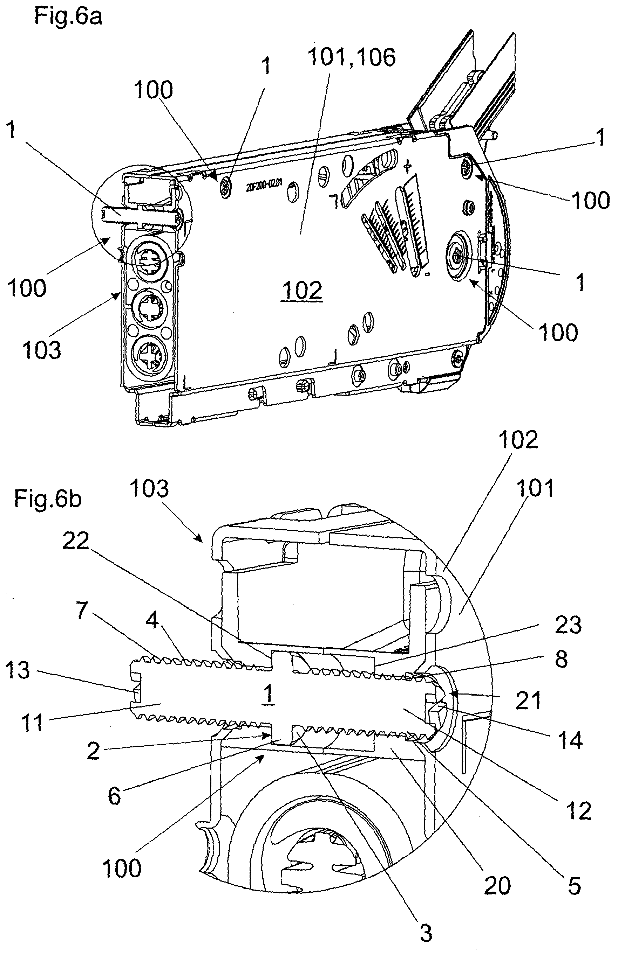

Figur 6a zeigt eine perspektivische Ansicht eines Möbelbeschlags 101. Dieser Möbelbeschlag 101 weist mehrere Befestigungsvorrichtungen 100 auf, bei einer dieser Befestigungsvorrichtungen 100 ist eine Schnittdarstellung ausgeführt, um das Innenleben des Möbelbeschlags 101 ersichtlich zu machen.

Dieser Möbelbeschlag 101 ist in diesem bevorzugten Ausführungsbeispiel als ein Stellantrieb 106 für eine Möbelklappe 105 (nicht dargestellt, siehe Figur 1) ausgeführt. Der Möbelbeschlag 101, hier ein Stellantrieb 106, ist symmetrisch ausgebildet, d.h. dass er sowohl an einer linken als auch an einer rechten Möbelkorpusseite mit seiner linken Möbelbeschlagseite 102 oder mit seiner rechten Möbelbeschlagseite 103 über die Befestigungsvorrichtungen 100 befestigt werden kann.
Der Möbelbeschlag 101 könnte natürlich ebenso als eine Ausstoßvorrichtung, Antriebsvorrichtung, Einzugsvorrichtung oder Dämpfungsvorrichtung für ein bewegliches Möbelteil 104 (siehe Figur 1) oder - wie hier dargestellt - als Stellantrieb 106 für eine Möbelklappe 105, oder als Schienenausziehführung oder als Beleuchtungsvorrichtung ausgebildet sein. Ebenfalls ist jegliche andere Baugruppe vorstellbar, die synchron ausgebildet werden kann, um an wenigstens zwei unterschiedlichen Montagepositionen in einem oder an einem Möbel 110 (siehe Figur 1) über eine Befestigungsvorrichtung 100 befestigt zu werden.
Figur 6b zeigt eine Detailansicht der Figur 6a bei einer der Befestigungsvorrichtungen 100 in dem Möbelbeschlag 101.
Diese Befestigungsvorrichtung 100 dient zum Befestigen des Möbelbeschlags 101 an einem Möbel 110 (siehe Figur 1), wobei mit der Befestigungsvorrichtung 100 der Möbelbeschlag 101 wahlweise mit einer linken 102 oder einer rechten Möbelbeschlagseite 103 am Möbel 110 befestigbar ist. Dazu weist die Befestigungsvorrichtung 100 ein Verbindungselement 1 auf, wobei das Verbindungselement 1 wenigstens zwei Verbindungselementanschläge 2 und 3 aufweist und weiters weist das Verbindungselement 1 zwei Verbindungselementbereiche 4 und 5 zum Befestigen des Möbelbeschlags 101 am Möbel 110 auf. Weiters weist die Befestigungsvorrichtung 100 einen Befestigungskörper 20 mit einer Durchgangsöffnung 21 auf, wobei das Verbindungselement 1 zumindest teilweise, vorzugsweise im Wesentlichen vollständig, in der Durchgangsöffnung 21 angeordnet ist und das Verbindungselement 1 relativ zu diesem Befestigungskörper 20 begrenzt bewegbar ist. Der Befestigungskörper 20 weist weiters zwei Anschläge 22 und 23 auf, wobei jeweils einer dieser Anschläge 22 und 23 mit einem der beiden Verbindungselementanschläge 2 und 3 in einer Montagestellung korrespondiert.

Wie in dieser Darstellung gut erkennbar ist, erstreckt sich das Verbindungselement 1 im Wesentlichen vollständig durch die Durchgangsöffnung 21 des Befestigungskörpers 20.

Im Montagezustand versenkt sich das Verbindungselement 1 in der Durchgangsöffnung 21 der Befestigungsvorrichtung 20, auf der anderen Seite dringt das Verbindungselement 1 in eine Wand des Möbels 110 (nicht dargestellt) ein und wird dort befestigt.

In dieser Darstellung 6b korrespondiert der Anschlag 22 des Befestigungskörpers 20 mit dem Verbindungselementanschlag 2 und liegt an diesem an.

Zur Montage wird der Möbelbeschlag 101 mit seiner rechten Möbelbeschlagseite 103 an eine hier nicht dargestellte Wand eines Möbels 110 (siehe Figur 1) gehalten. An der Wand des Möbels 110 sind bevorzugt vorgefertigte Ausnehmungen vorgesehen, die mit den Verbindungselementbereichen 4 und 5 des Verbindungselements 1 korrespondieren. Wenn sich das Ende des Verbindungselements 1 über der Ausnehmung an der Wand des Möbels 110 befindet, kann das Verbindungselement 1 über dessen Werkzeugaufnahme 14 in die Wand des Möbels 110 eingeschraubt werden. Dazu weist das Verbindungselement 1 an seinen Verbindungselementbereichen 4 und 5 jeweils ein Gewinde 7 und 8 auf. Wie hier dargestellt würde nun das Gewinde 7 des Verbindungselementes 1 in die Wand des Möbels 110 eindringen.

Sobald der Verbindungselementanschlag 2 des Verbindungselements 1 auf den Anschlag 22 des Befestigungskörpers 20 trifft, wird die Befestigungsvorrichtung 100 und damit der Möbelbeschlag 101 zur Wand des Möbels 110 hin gezogen. Sobald die rechte Möbelbeschlagseite 103 auf die Wand des Möbels 110 trifft, wird über das Verbindungselement 1 und den Befestigungskörper 20 der Möbelbeschlag 101 am Möbel 110 befestigt.

In diesem bevorzugten Ausführungsbeispiel wird die Verbindung zwischen dem Verbindungselement 1 und der Wand des Möbels 110 über ein Gewinde 7 hergestellt. Dies ist natürlich nur eine der möglichen Ausführungsformen für ein derartiges Verbindungselement 1. Für den Fachmann ist es selbstverständlich, dass auch jede andere mögliche kraftschlüssige und/oder formschlüssige Verbindung mit dem Möbel 110 vorstellbar ist. So könnte diese Verbindung etwa über eine Spreizvorrichtung oder eine Pressverbindung, eine Klemmvorrichtung oder Ähnlichem herstellbar sein.

Wie in dieser Darstellung gut erkennbar ist, ist der Befestigungskörper 20 der Befestigungsvorrichtung 100 vollständig im Inneren des Möbelbeschlags 101 ausgebildet und bildet mit diesem eine kompakte, vorgefertigte Baugruppe.

In dieser Darstellung ist ebenfalls gut erkennbar, dass das Verbindungselement 1 symmetrisch ausgebildet ist, wobei sich in der Mitte des Verbindungselementes 1 ein Flansch 6 befindet. An diesem Flansch 6 sind auf einer Seite der Verbindungselementanschlag 2 und auf der anderen Seite der Verbindungselementanschlag 3 ausgebildet. Ebenfalls symmetrisch zueinander sind die beiden Verbindungselementbereiche 4 und 5 ausgebildet, welche jeweils ein Gewinde 7 und 8 aufweisen. Somit stellen die Verbindungselementbereiche 4 und 5 zusammen mit ihren Werkzeugaufnahmen 13 und 14 Bolzenschrauben 11 und 12 dar, wobei jeweils die gegenüberliegende Werkzeugaufnahme für die Befestigung des Verbindungselementbereichs zuständig ist. D.h., über die Werkzeugaufnahme 14 wird der Verbindungselementbereich 4 mit dem Möbel 110 verbunden, über die Werkzeugaufnahme 13 wird der Verbindungselementbereich 5 mit dem Möbel 110 verbunden.

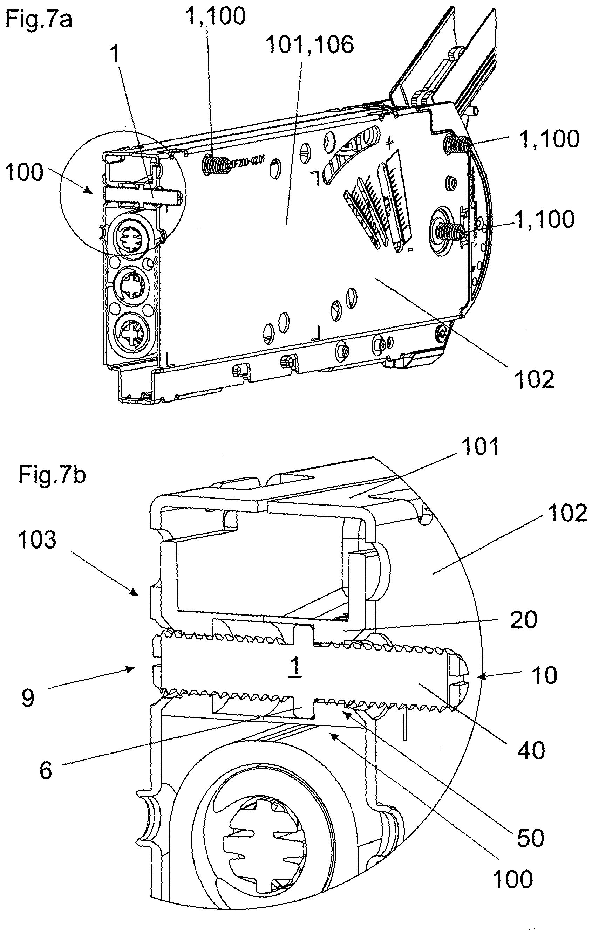

In den Figuren 7a und 7b ist nun die Montage desselben Möbelbeschlags 101 auf einer gegenüberliegenden Wand eines nicht dargestellten Möbels 110 dargestellt.

Sinngemäß gilt alles unter den Figuren 6a und 6b Erwähnte, nur eben dass es sich hier um die Montage des Möbelbeschlags 101 mit seiner linken Möbelbeschlagseite 102 an einem hier nicht dargestellten Möbel 110 handelt.

Wie in diesen Figuren 7a und 7b gut erkennbar ist, bilden das Verbindungselement 1 und der Befestigungskörper 20 der Befestigungsvorrichtung 100 gemeinsam eine vormontierte, untrennbare Baueinheit 50. Somit kann vermieden werden, dass das Verbindungselement 1 vor der Montage der Befestigungsvorrichtung 100 bzw. des dazugehörigen Möbelbeschlags 101 verloren geht.

Ebenfalls bildet die Befestigungsvorrichtung 100 mit dem Möbelbeschlag 101 gemeinsam eine vormontierte, untrennbare Baugruppe.

Dieser hier dargestellte Möbelbeschlag 101 weist vier Befestigungsvorrichtungen 100 auf, mit denen der Möbelbeschlag 101 an einem Möbel 110 befestigt wird. Dies dient dazu, einen sicheren Halt zu gewährleisten. Ebenso ist es natürlich auch vorstellbar, dass nur eine Befestigungsvorrichtung 100 zur Befestigung des Möbelbeschlags 101 an einem Möbel 110 genügt.

In den Figuren 6b und 7b ist gut erkennbar, dass die Verbindungselementbereiche 4 und 5 des Verbindungselementes 1 in Montagestellung der Befestigungsvorrichtung 100 bzw. des Möbelbeschlags 101 die linke Möbelbeschlagsseite 102 bzw. die rechte Möbelbeschlagseite 103 überragen und somit mit ihren Verbindungselementbereichen 4 und 5 in das Möbel 110 eindringen können. Auf der anderen Seite verschwindet das Verbindungselement 1 im Inneren der Befestigungsvorrichtung 100 und somit im Inneren des Möbelbeschlags 101 und bildet somit eine ästhetisch ansprechende Baugruppe, da im Montagezustand nichts über die linke Möbelbeschlagseite 102 bzw. über die rechte Möbelbeschlagseite 103 hinausragt. In dieser Darstellung 7b ist weiters gut erkennbar, dass die beiden Enden 9 und 10 des Verbindungselementes 1 als Bolzenschrauben 11 und 12 ausgebildet sind, das Verbindungselement 1 ist in diesem bevorzugtem Ausführungsbeispiel als eine doppelte Endenbolzenschraube 40 mit Flansch 6 ausgeführt.

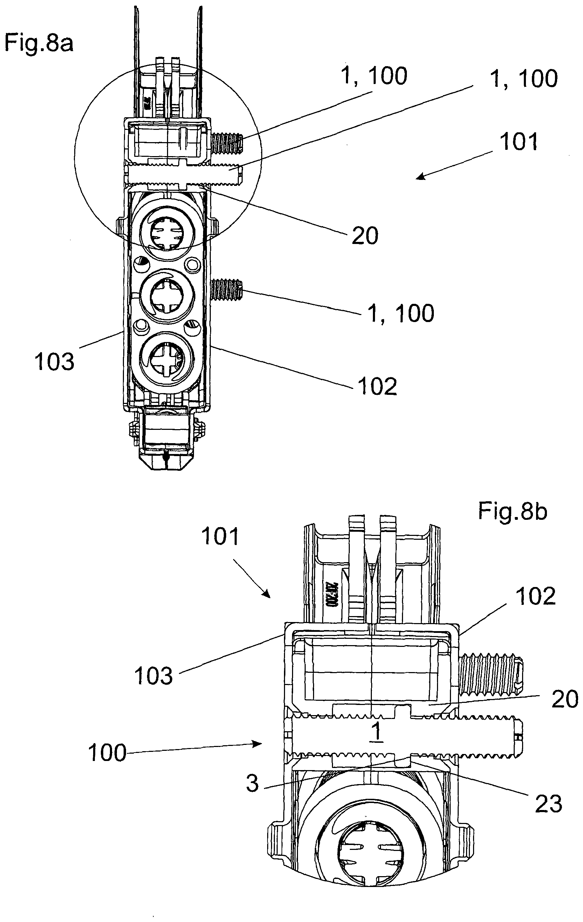

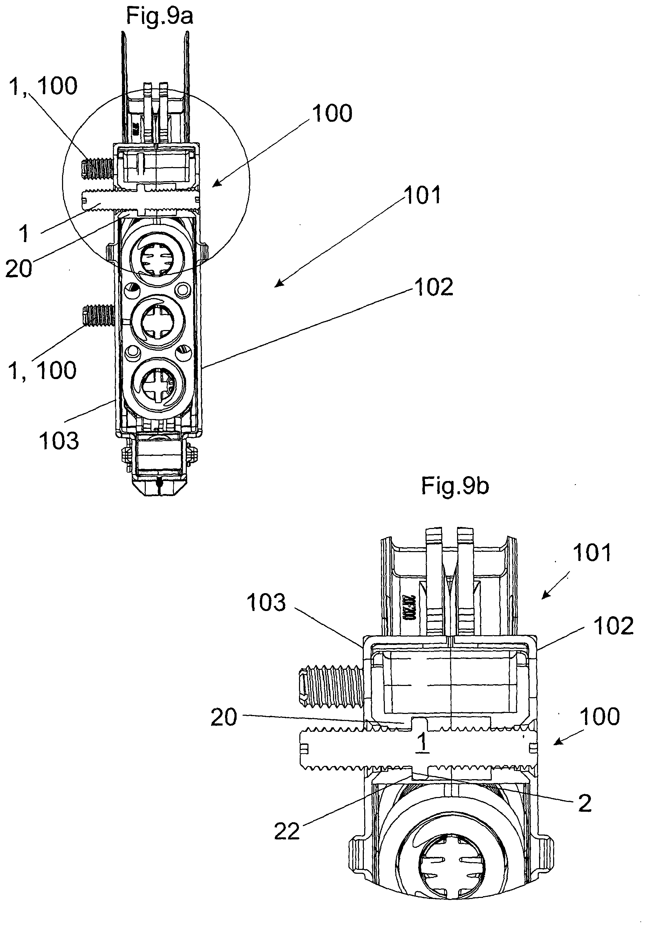

Die Figuren 8a und 8b bzw. 9a und 9b zeigen Schnitte durch Seitenansichten des Möbelbeschlags 101.

Dabei entsprechen die Darstellungen der Figuren 8a und 8b den perspektivischen Darstellungen in den Figuren 7a und 7b, ebenso verhält es sich mit den Figuren 9a und 9b, diese entsprechen den perspektivischen Darstellungen in den Figuren 6a und 6b.

Das unter den Figuren 6a und 6b Erwähnte gilt somit ebenso für die Figuren 9a und 9b, ebenso verhält es sich mit den Beschreibungen der Figuren 7a und 7b bezüglich der Figuren 8a und 8b.

In den Figuren 8b und 9b ist gut erkennbar, dass der Befestigungskörper 20 vollständig im Möbelbeschlag 101 ausgebildet ist und nicht über die linke 102 und rechte 103 Möbelbeschlagseite hinausragt. Die Anschläge 22 und 23 des Befestigungskörpers 20 sind im Möbelbeschlag 101 - beabstandet zu der linken 102 und rechten 103 Möbelbeschlagseite - ausgebildet. Somit ist eine kompakte Baugruppe erzielbar.

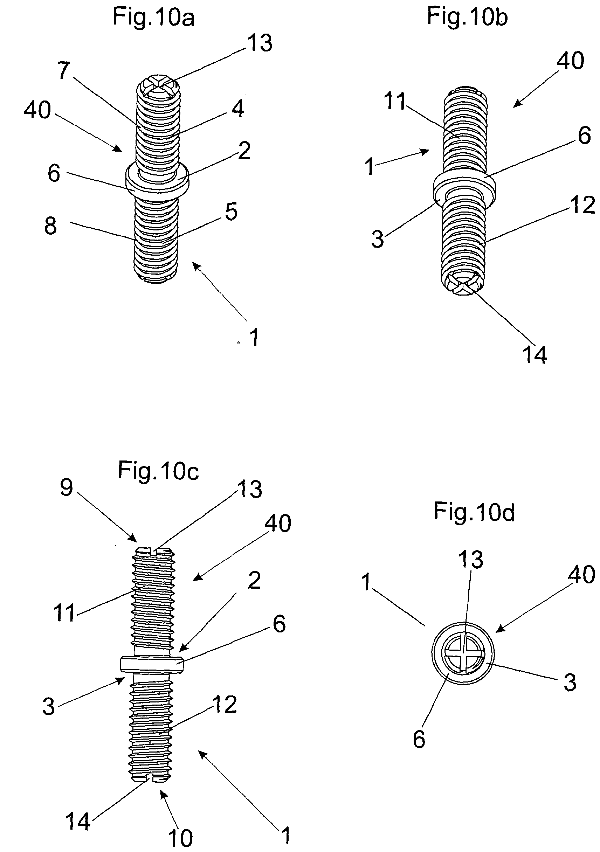

In den Figuren 10a bis 10d ist jeweils ein Verbindungselement 1 dargestellt. In diesem bevorzugten Ausführungsbeispiel ist das Verbindungselement 1 - wie hier gut erkennbar - einstückig ausgebildet.

Das Verbindungselement 1 weist dabei zwei Verbindungselementbereiche 4 und 5 auf, die in diesem bevorzugten Ausführungsbeispiel als Gewinde 7 bzw. 8 ausgebildet sind. Ebenfalls weist das Verbindungselement 1 zwei Verbindungselementanschläge 2 und 3 auf, die in diesem bevorzugten Ausführungsbeispiel radial vom Verbindungselement 1 abstehen. Besonders bevorzugt ist hierbei vorgesehen, dass die Verbindungselementanschläge 2 und 3 als Flansch 6 am Verbindungselement 1 ausgebildet sind.

Aus der Figur 10c ist gut erkennbar, dass die beiden Enden 9 und 10 des Verbindungselements 1 als Bolzenschrauben 11 und 12 ausgebildet sind.

Am Verbindungselement 1 sind zwei gesonderte Werkzeugaufnahmen 13 und 14 ausgebildet, über die das Verbindungselement 1 in ein hier nicht dargestelltes Möbel 110 eingeschraubt werden kann. Diese Werkzeugaufnahmen 13 und 14 sind, wie hier bevorzugt dargestellt, als Kreuzschlitzwerkzeugaufnahmen ausgebildet, ebenso ist es natürlich vorstellbar, dass diese Werkzeugaufnahmen 13 und 14 für andere zweckdienliche Werkzeuge ausgebildet werden, wie etwa als Schlitz oder Innensechskant oder Innensechsrund oder ähnliches.

Wie aus der Figur 10c weiters gut ersichtlich ist, sind die beiden Verbindungselementbereiche 4 und 5 des Verbindungselements 1 symmetrisch zueinander ausgebildet, genau genommen ist in diesem bevorzugten Ausführungsbeispiel das ganze Verbindungselement 1 symmetrisch ausgebildet - als eine doppelte Endenbolzenschraube 40 mit Flansch 6.

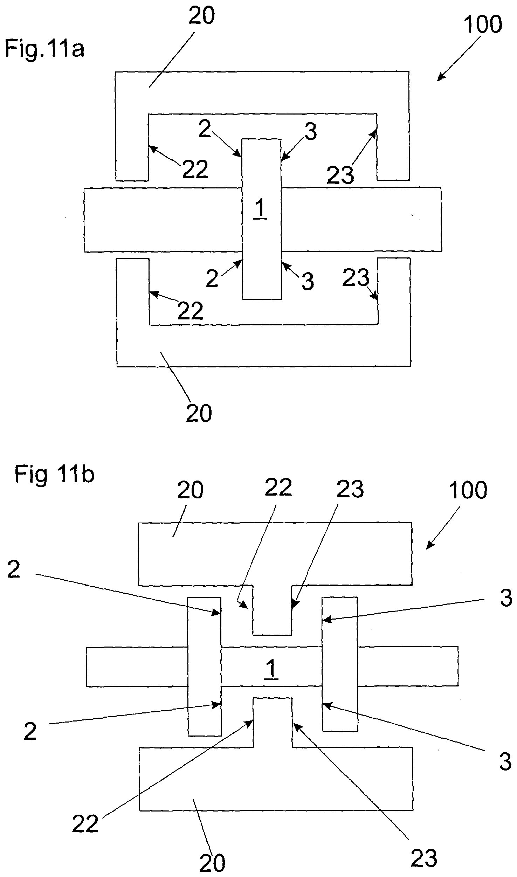

Das Prinzip für diese symmetrische Befestigung eines Möbelbeschlags 101 an einem hier nicht dargestellten Möbel 110 wird nun anhand der Figur 11 a und in einer Variante dazu in der Figur 11b erläutert.

Figur 11a zeigt dabei eine Befestigungsvorrichtung 100 mit einem Befestigungskörper 20 und einem Verbindungselement 1, wie in den vorangegangenen Figuren beschrieben.

Zur Befestigung auf der linken Seite wird das Verbindungselement 1 solange nach links bewegt - sei es nun durch Verschrauben, Verschieben, o.ä. - bis der Verbindungselementanschlag 2 des Verbindungselements 1 auf den Anschlag 22 des Befestigungskörpers 20 trifft und somit die Befestigungsvorrichtung 100 links befestigt werden kann.

Ist eine Befestigung auf der rechten Seite gewünscht, so wird das Verbindungselement 1 nach rechts bewegt bis der Verbindungselementanschlag 3 des Verbindungselements 1 auf den Anschlag 23 des Befestigungskörpers 20 trifft und somit die Befestigungsvorrichtung 100 rechts befestigt werden kann.

Figur 11b zeigt eine Variante einer Befestigungsvorrichtung 100 wie eben in Figur 11a dargestellt. Im Gegensatz zu der Ausführungsform in Figur 11a befinden sich nun die Anschläge 22 und 23 des Befestigungskörpers 20 zwischen den Verbindungselementanschlägen 2 und 3 des Verbindungselements 1 - im Gegensatz zum Ausführungsbeispiel der Figur 11a, bei dem sich die Verbindungselementanschläge 2 und 3 des Verbindungselements 1 zwischen den Anschlägen 22 und 23 des Befestigungskörpers 20 der Befestigungsvorrichtung 100 befinden.

Die Befestigung an sich erfolgt auf gleiche Art und Weise, d.h. das Verbindungselement 1 wird zur Befestigung auf der linken Seite nach links bewegt, solange bis der Verbindungselementanschlag 3 auf den Anschlag 23 des Befestigungskörpers 20 trifft und dadurch die Befestigungsvorrichtung 101 links befestigt werden kann. Für eine Befestigung auf der rechten Seite wird das Verbindungselement 1 nach rechts bewegt, bis der Verbindungselementanschlag 2 auf den Anschlag 22 des Befestigungskörpers 20 trifft und dadurch die Befestigungsvorrichtung 100 rechts befestigt werden kann.

## Patentansprüche

1. Möbelbeschlag (101) für ein Möbel (110) mit wenigstens einer Befestigungsvorrichtung (100) zum Befestigen des Möbelbeschlags (101) an dem Möbel (110), wobei mit der Befestigungsvorrichtung (100) der Möbelbeschlag (101) wahlweise mit einer linken (102) oder einer rechten Möbelbeschlagsseite (103) am Möbel (110) befestigbar ist, mit:
- einem Verbindungselement (1), und
- einem Befestigungskörper (20) mit einer Durchgangsöffnung (21), wobei das Verbindungselement (1) zumindest teilweise in der Durchgangsöffnung (21) angeordnet ist und das Verbindungselement (1) relativ zu dem Befestigungskörper (20) begrenzt bewegbar ist,
**dadurch gekennzeichnet, dass** der Befestigungskörper (20) im Wesentlichen vollständig im Möbelbeschlag (101) ausgebildet ist und dass das Verbindungselement (1) wenigstens zwei Verbindungselementanschläge (2, 3) aufweist und weiters zwei Verbindungselementbereiche (4, 5) zum Befestigen des Möbelbeschlags (101) am Möbel (110) aufweist und wenigstens zwei Anschläge (22, 23) im oder am Befestigungskörper (20) ausgebildet sind, wobei jeweils einer der beiden Anschläge (22, 23) mit einem der beiden Verbindungselementanschläge (2, 3) in Montagestellung korrespondiert, wobei zur Befestigung jeweils einer der beiden Anschläge (22, 23) auf einen der beiden Verbindungselementanschläge (2, 3) trifft.

2. Möbelbeschlag nach Anspruch 1, **dadurch gekennzeichnet, dass** das Verbindungselement (1) und der Befestigungskörper (20) gemeinsam als eine vormontierte, untrennbare Baueinheit (50) ausgebildet sind.

3. Möbelbeschlag nach Anspruch 1 oder 2, **dadurch gekennzeichnet, dass** sich das Verbindungselement (1) im Wesentlichen vollständig durch die Durchgangsöffnung (21) des Befestigungskörpers (20) hin erstreckt.

4. Möbelbeschlag nach einem der Ansprüche 1 bis 3, **dadurch gekennzeichnet, dass** das Verbindungselement (1) einstückig ausgebildet ist.

5. Möbelbeschlag nach einem der Ansprüche 1 bis 4, **dadurch gekennzeichnet, dass** die Verbindungselementanschläge (2, 3) radial vom Verbindungselement (1) abstehen.

6. Möbelbeschlag nach einem der Ansprüche 1 bis 5, **dadurch gekennzeichnet, dass** die Verbindungselementanschläge (2, 3) als Flansch (6) am Verbindungselement (1) ausgebildet sind.

7. Möbelbeschlag nach einem der Ansprüche 1 bis 6, **dadurch gekennzeichnet, dass** die Verbindungselementbereiche (4, 5) kraftschlüssig und/oder formschlüssig mit dem Möbel (110) verbindbar sind.

8. Möbelbeschlag nach einem der Ansprüche 1 bis 7, **dadurch gekennzeichnet, dass** die beiden Verbindungselementbereiche (4, 5) zueinander symmetrisch am Verbindungselement (1) ausgebildet sind.

9. Möbelbeschlag nach einem der Ansprüche 1 bis 8, **dadurch gekennzeichnet, dass** die Verbindungselementbereiche (4, 5) des Verbindungselements (1) jeweils ein Gewinde (7, 8) aufweisen.

10. Möbelbeschlag nach einem der Ansprüche 1 bis 9, **dadurch gekennzeichnet, dass** am Verbindungselement (1) zwei gesonderte Werkzeugaufnahmen (13, 14) ausgebildet sind.

11. Möbelbeschlag nach einem der Ansprüche 1 bis 10, **dadurch gekennzeichnet, dass** die Anschläge (22, 23) des Befestigungskörpers (20) im Möbelbeschlag (101) - beabstandet zu der linken (102) und rechten Möbelbeschlagsseite (103) - ausgebildet sind.

12. Möbelbeschlag nach einem der Ansprüche 1 bis 11, **dadurch gekennzeichnet, dass** der Möbelbeschlag (101) als Ausstoßvorrichtung, Antriebsvorrichtung, Einzugsvorrichtung oder Dämpfungsvorrichtung für ein bewegliches Möbelteil (104) oder als Stellantrieb (106) für eine Möbelklappe (105) oder als Schienenausziehführung oder als Beleuchtungsvorrichtung ausgebildet ist.

13. Möbelbeschlag nach einem der Ansprüche 1 bis 12, **dadurch gekennzeichnet, dass** ein Verbindungselementbereich (4, 5) in Montagestellung die linke (102) oder die rechte Möbelbeschlagsseite (103) überragt.

14. Möbel (110) mit einem Möbelbeschlag (101) nach einem der Ansprüche 1 bis 13.

## Claims

1. A furniture fitting (101) for an article of furniture (110) having at least one fixing device (100) for fixing a furniture fitting (101) to an article of furniture (110), wherein the furniture fitting (101) can be fixed to the article of furniture (110) with the fixing device (100) selectively with a left-hand (102) or a right-hand furniture fitting side (103), comprising:
- a connecting element (1), and
- a fixing body (20) having a through opening (21), wherein the connecting element (1) is at least partially arranged in the through opening (21) and the connecting element (1) is limitedly moveable relative to the fixing body (20),
**characterised in that** the fixing body (20) is provided substantially completely in the furniture fitting (101) and the connecting element (1) has at least two connecting element abutments (2, 3) and further two connecting element regions (4, 5) for fixing the furniture fitting (101) to the article of furniture (110) and at least two abutments (22, 23) are provided in or on the fixing body (20), wherein a respective one of the two abutments (22, 23) corresponds to one of the two connecting element abutments (2, 3) in the assembly position, wherein for fixing one of the two abutments (22, 23) meets one of the two connecting element abutments (2, 3).

2. A furniture fitting as set forth in claim 1 **characterised in that** the connecting element (1) and the fixing body (20) are jointly in the form of a pre-assembled inseparable structural unit (50).

3. A furniture fitting as set forth in claim 1 or claim 2 **characterised in that** the connecting element (1) extends substantially completely through the through opening (21) in the fixing body (20).

4. A furniture fitting as set forth in one of claims 1 through 3 **characterised in that** the connecting element (1) is realized in one piece.

5. A furniture fitting as set forth in one of claims 1 through 4 **characterised in that** the connecting element abutments (2, 3) project radially from the connecting element (1).

6. A furniture fitting as set forth in one of claims 1 through 5 **characterised in that** the connecting element abutments (2, 3) are in the form of a flange (6) on the connecting element (1).

7. A furniture fitting as set forth in one of claims 1 through 6 **characterised in that** the connecting element regions (4, 5) can be connected to the article of furniture (110) in force-locking and/or positively locking relationship.

8. A furniture fitting as set forth in one of claims 1 through 7 **characterised in that** the two connecting element regions (4, 5) are formed on the connecting elements (1) symmetrically relative to each other.

9. A furniture fitting as set forth in one of claims 1 through 8 **characterised in that** the connecting element regions (4, 5) of the connecting element (1) have a respective thread (7, 8).

10. A furniture fitting as set forth in one of claims 1 through 9 **characterised in that** two separate tool receiving means (13, 14) are provided on the connecting element (1).

11. A furniture fitting as set forth in on of claims 1 through 10 **characterised in that** the abutments (22, 23) on the fixing body (20) are provided in the furniture fitting (101) in spaced relationship with the left-hand (102) and right-hand furniture fitting side (103).

12. A furniture fitting as set forth in one of claims 1 through 11 **characterised in that** the furniture fitting (101) is in the form of an ejection device, drive device, pull-in device or damping device for a moveable furniture part (104) or in the form of an actuating drive (106) for a furniture flap (105) or in the form of a drawer extension guide or in the form of a lighting device.

13. A fixing device as set forth in one of claims 1 through 12 **characterised in that** in the assembly position a connecting element region (4, 5) projects beyond the left-hand (102) or the right-hand furniture fitting side (103).

14. An article of furniture (110) having a furniture fitting (101) as set forth in one of claims 1 through 13.

## Revendications

1. Fourniture pour meubles (101) pour un meuble (110) avec au moins un dispositif de fixation (100) pour fixer la fourniture pour meubles (101) au meuble (110), dans laquelle avec le dispositif de fixation (100) la fourniture pour meubles (101) peut être fixée facultativement avec un côté de fourniture pour meubles gauche (102) ou droit (103) au meuble (110), avec :
- un élément de liaison (1), et
- un corps de fixation (20) avec une ouverture de passage (21), l'élément de liaison (1) étant disposé au moins partiellement dans l'ouverture de passage (21) et l'élément de liaison (1) étant mobile de façon limitée par rapport au corps de fixation (20),
**caractérisée en ce que** le corps de fixation (20) est conçu essentiellement en entier dans la fourniture pour meubles (101) et **en ce que** l'élément de liaison (1) présente au moins deux butées d'élément de liaison (2, 3) et présente, en outre, deux zones d'élément de liaison (4, 5) pour fixer la fourniture pour meubles (101) au meuble (110) et au moins deux butées (22, 23) sont conçues dans ou sur le corps de fixation (20), dans laquelle à chaque fois l'une des deux butées (22, 23) correspond en position de montage à l'une des deux butées d'élément de liaison (2, 3), dans laquelle pour la fixation l'une des deux butées (22, 23) touche à chaque fois l'une des deux butées d'élément de liaison (2, 3).

2. Fourniture pour meubles selon la revendication 1, **caractérisée en ce que** l'élément de liaison (1) et le corps de fixation (20) sont conçus ensemble comme une unité modulaire pré-montée, inséparable (50).

3. Fourniture pour meubles selon la revendication 1 ou 2, **caractérisée en ce que** l'élément de liaison (1) s'étend essentiellement en entier à travers l'ouverture de passage (21) du corps de fixation (20).

4. Fourniture pour meubles selon l'une des revendications 1 à 3, **caractérisée en ce que** l'élément de liaison (1) est conçu d'une seule pièce.

5. Fourniture pour meubles selon l'une des revendications 1 à 4, **caractérisée en ce que** les butées d'élément de liaison (2, 3) dépassent radialement de l'élément de liaison (1).

6. Fourniture pour meubles selon l'une des revendications 1 à 5, **caractérisée en ce que** les butées d'élément de liaison (2, 3) sont conçues comme bride (6) sur l'élément de liaison (1).

7. Fourniture pour meubles selon l'une des revendications 1 à 6, **caractérisée en ce que** les zones d'élément de liaison (4, 5) peuvent être reliées au meuble (110) par l'influence d'une force et / ou par engagement positif.

8. Fourniture pour meubles selon l'une des revendications 1 à 7, **caractérisée en ce que** les deux zones d'élément de liaison (4, 5) sont conçues symétriquement l'une par rapport à l'autre sur l'élément de liaison (1).

9. Fourniture pour meubles selon l'une des revendications 1 à 8, **caractérisée en ce que** les zones d'élément de liaison (4, 5) de l'élément de liaison (1) présentent à chaque fois un filetage (7, 8).

10. Fourniture pour meubles selon l'une des revendications 1 à 9, **caractérisée en ce que** deux logements d'outil distincts (13, 14) sont conçus sur l'élément de liaison (1).

11. Fourniture pour meubles selon l'une des revendications 1 à 10, **caractérisée en ce que** les butées (22, 23) du corps de fixation (20) sont conçues dans la fourniture pour meubles (101) - à distance par rapport au côté de fourniture pour meubles gauche (102) et droit (103) -.

12. Fourniture pour meubles selon l'une des revendications 1 à 11, **caractérisée en ce que** la fourniture pour meubles (101) est conçue comme un dispositif éjecteur, un dispositif d'entraînement, un dispositif de retrait ou un dispositif amortisseur pour une partie de meuble mobile (104) ou comme un actionneur (106) pour un rabat de meuble (105) ou comme une glissière de guidage de rail ou comme un dispositif d'éclairage.

13. Fourniture pour meubles selon l'une des revendications 1 à 12, **caractérisée en ce qu'**une zone d'élément de liaison (4, 5), en position de montage, dépasse en hauteur le côté de fourniture pour meubles gauche (102) ou droit (103).

14. Meuble (110) avec une fourniture pour meubles (101) selon l'une des revendications 1 à 13.
